# DEMANDE DE BREVET EUROPEEN

(11) **EP 4 020 836 A1**
(43) Date de publication de la demande: **29.06.2022**
(21) Numéro de dépôt: 21213692.3
(22) Date de dépôt: 10.12.2021
(51) Int. Cl.: H04B 7/185, H04B 1/713, H04L 1/00, H04L 1/20

(54) **FORME D'ONDE À RÉSILIENCE ADAPTATIVE**

(30) Priorité: 23.12.2020 FR 2014049
(71) Demandeur: THALES, 92400 Courbevoie (FR)
(72) Inventeur: SOULIE, Antoine, 92622 Gennevilliers Cedex (FR); DELATTRE, Michel, 92622 Gennevilliers Cedex (FR)
(74) Mandataire: Marks & Clerk France

(57) **Abrégé**

L'invention concerne un procédé d'allocation de ressources dans un système satellitaire à évasion de fréquence comprenant un satellite et au moins un terminal utilisateur dans lequel les transmissions sont organisées sous la forme de supertrames comprenant une pluralité de trames, chaque trame comprenant un ou plusieurs paliers de données transmis sur un canal fréquentiel sélectionné parmi un ensemble de canaux fréquentiels selon une loi connue des équipements du système satellitaire, le procédé étant caractérisé en ce qu'il comprend l'adaptation dynamique (205) du nombre de paliers compris dans les trames en fonction des conditions de propagation des signaux émis par le satellite et reçus par les terminaux utilisateurs.

## Description

### Domaine technique :

L'invention se situe dans le domaine des télécommunications et plus précisément dans le domaine des transmissions par satellites de communication à évasion de fréquence.

Elle porte plus précisément sur un procédé d'allocation de ressources dans un réseau satellitaire où la forme d'onde est adaptée dynamiquement aux conditions de propagation, en particulier en présence d'interférences.

### Technique antérieure :

On appelle « forme d'onde » un signal radiofréquence modulé de manière à permettre la transmission de données. Les formes d'ondes ont différents paramètres (bande de fréquence, largeur de bande de fréquence, schéma d'accès multiple, longueur des trames, schéma de modulation, de codage, longueur et type d'entrelacement, etc...) adaptés en fonction des utilisations souhaitées: type de transmission, débit visé, portée recherchée, etc ...

Il est connu de définir des formes d'ondes dont les paramètres sont adaptables dynamiquement. C'est la radio-logicielle (en anglais *Software Radio*). Par exemple, les techniques d'ACM (sigle anglais pour *Adaptive Coding and Modulation*, ou codage et modulation adaptatifs) permettent de faire varier dynamiquement le schéma de codage et de modulation d'une forme d'onde pour obtenir le meilleur point de fonctionnement en fonction de mesures des conditions de propagation, généralement des mesures de rapport signal à bruit perçu par les terminaux utilisateurs ou le satellite.

Le partage de ressources radiofréquence entre différents terminaux récepteurs/émetteurs d'un même réseau nécessite le choix d'une règle d'accès multiple. Les règles d'accès multiples les plus utilisées sont le FDMA (sigle anglais pour *Frequency Duplex Multiple Access*, ou accès multiple par répartition en fréquence), où les utilisateurs partagent la ressource fréquentielle, le TDMA (sigle anglais pour *Time Duplex Multiple Access*, ou accès multiple par répartition dans le temps), où les utilisateurs partagent la ressource temporelle, et le CDMA (signal anglais pour *Code Duplex Multiple Access*, ou accès multiple par répartition en code), qui utilise l'étalement de spectre à partir de codes orthogonaux pour différentier les transmissions d'utilisateurs partageant les mêmes ressources.

Les transmissions radiofréquence par satellite sont affectées par les conditions de propagation des signaux, et en particulier par les interférences. Afin de rendre la forme d'onde robuste aux conditions de propagation, et en particulier aux interférences, l'état de l'art consiste à choisir une règle d'accès et les paramètres associés, puis à adapter les paramètres de la forme d'onde dynamiquement par des mécanismes d'ACM en fonction de la qualité des signaux reçus.

Des mécanismes de transmission tels que le FHSS (acronyme anglais pour *Frequency Hopping Spread Spectrum*, ou étalement de spectre par saut de fréquence) sont connus pour apporter aux transmissions de la robustesse contre les interférences, en particulier les interférences sélectives en fréquence (évanouissements liés aux multitrajets, auto-brouillage, brouillage intentionnel, ....). L'étalement de spectre par saut de fréquence consiste à découper la bande de fréquence en plusieurs canaux fréquentiels, puis à transmettre les données en changeant fréquemment de canal fréquentiel, selon une loi de saut de fréquence connue des participants du réseau seulement. Ce mécanisme de transmission est compatible des différents modes de multiplexages en accès et en particulier du TDMA. Le fait de changer de canaux et d'utiliser des canaux distincts pour les transmissions, associé à un schéma d'entrelacement et de codage robuste, permet de limiter voir de supprimer l'impact des interférences. La robustesse face aux interférences est fonction du nombre de canaux fréquentiels sur lesquels les données transmises sont codées et/ou entrelacées.

Dans le cas d'une transmission utilisant une règle d'accès multiple TDMA, la ressource temporelle est découpée en trames attribuées aux différents équipements. La durée des trames est fixe et ne tient pas compte du niveau d'interférences observé. Les trames sont dimensionnées par rapport au niveau d'interférences maximum que peut être amenée à supporter la forme d'onde, ce qui conduit à une dégradation de l'efficacité spectrale des transmissions lorsque les niveaux d'interférences observés sont faibles.

Pour combattre cette dégradation, il est connu de réaliser des réseaux hybrides, utilisant plusieurs liens de transmission parallèle implémentant des formes d'onde de robustesses différentes, dans lesquels les flux d'informations sont aiguillés dynamiquement en fonction des conditions de propagation. Par exemple, pour les liaisons satellitaires, il est connu d'implémenter un lien de transmission haut débit selon le standard DVB-S (sigle anglais pour *Digital Video Broadcast* - *Satellite*, ou diffusion vidéo numérique par satellite) ou DVB-S2 (2^{ème} version du standard DVB-S) en parallèle d'un lien de transmission robuste aux interférences, et de commuter de l'un à l'autre selon les conditions de propagation. Cependant, cette solution augmente la complexité des équipements, et donc leur coût, et n'est pas efficace spectralement.

Un objet de l'invention est donc de proposer une solution simple permettant de rendre des transmissions satellitaires robustes aux interférences tout en étant également efficace spectralement.

### Résumé de l'invention :

A cet effet, la présente invention décrit un procédé d'allocation de ressources dans un système satellitaire à évasion de fréquence comprenant un satellite et au moins un terminal utilisateur dans lequel les transmissions sont organisées sous la forme de supertrames comprenant une pluralité de trames, chaque trame comprenant un ou plusieurs paliers de données, chaque palier de données étant transmis sur un canal fréquentiel sélectionné parmi un ensemble de canaux fréquentiels selon une loi connue des équipements du système satellitaire, le procédé étant caractérisé en ce qu'il comprend l'adaptation dynamique du nombre de paliers compris dans les trames en fonction des conditions de propagation des signaux émis par le satellite et reçus par les terminaux utilisateurs.

Selon un mode de réalisation, le procédé selon l'invention comprend :
- une étape de transmission, par les terminaux utilisateurs vers un contrôleur de réseau en charge des allocations de ressources du réseau via le satellite, d'informations concernant les conditions de propagation, et
- une étape d'allocation, par le contrôleur de réseau, de trames aux différents utilisateurs et de transmission d'informations concernant la structure des supertrames aux terminaux du système satellitaire en fonction des conditions de propagation.

Avantageusement, une pluralité de structures de supertrames peuvent être prédéfinies, les informations concernant la structure des supertrames étant alors un identifiant d'une desdites structures de supertrames prédéfinies.

Selon le mode de réalisation du procédé selon l'invention, les informations concernant les conditions de propagation peuvent être une mesure de rapport signal à bruit, une mesure de rapport interférence sur signal ou une mesure de taux d'erreur bit.

Dans un mode de réalisation où les informations concernant les conditions de propagation sont des mesures de rapport signal à bruit par canal fréquentiel, le procédé comprend :
- le calcul d'une valeur moyenne et d'une variance des mesures de rapport signal à bruit, et
- l'adaptation du nombre de paliers par trame à partir de la variation de la valeur moyenne et de la variance des mesures de rapport signal à bruit.

Avantageusement, le procédé selon l'invention comprend en outre l'adaptation dynamique d'un schéma de modulation et de codage utilisé pour transmettre les données dans les trames en fonction des conditions de propagation.

Avantageusement, l'adaptation dynamique du nombre de paliers compris dans les trames est réalisée en outre en fonction des conditions de propagation des signaux émis par les terminaux utilisateurs et reçus par le satellite.

### Brève description des figures :

L'invention sera mieux comprise et d'autres caractéristiques, détails et avantages apparaîtront mieux à la lecture de la description qui suit, donnée à titre non limitatif, et grâce aux figures annexées, données à titre d'exemple, parmi lesquelles :
La figure 1 représente schématiquement la composition d'un réseau satellitaire dans lequel vient s'insérer le procédé d'allocation de ressources selon l'invention.
La figure 2 représente les différentes étapes du procédé d'allocation de ressources dans un système satellitaire à évasion de fréquence selon un mode de réalisation l'invention.
La figure 3 représente différentes configurations de supertrames mises en œuvre par le procédé selon l'invention, dans le cadre d'une liaison satellitaire où une supertrame est définie pour la liaison montante et une supertrame est définie pour la liaison descendante.

Des références identiques peuvent être utilisées dans des figures différentes lorsqu'elles désignent des éléments identiques ou comparables.

### Description détaillée :

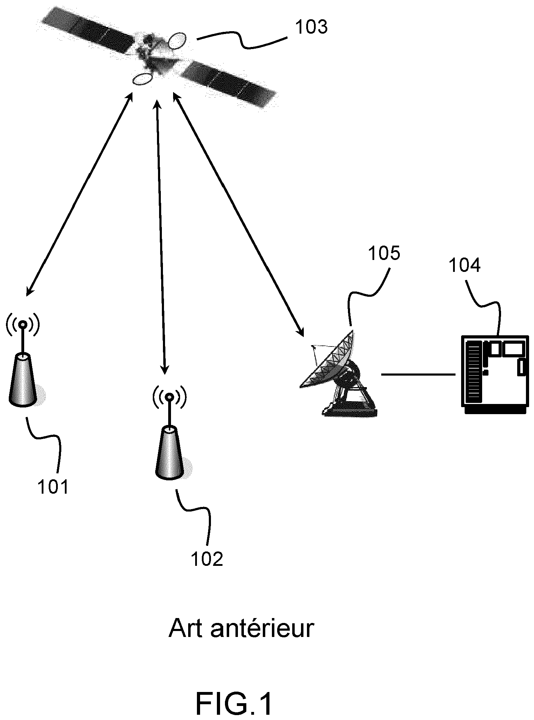

L'invention se place dans le contexte des transmissions dans un réseau satellitaire. La figure 1 représente schématiquement la composition d'un réseau satellitaire classique, dans lequel vient s'insérer le procédé d'allocation de ressources selon l'invention. Le réseau satellitaire comprend un ou plusieurs terminaux utilisateurs 101 et 102, configurés pour échanger des données à travers un satellite 103. Les allocations de ressources au sein du réseau satellitaire sont réalisées par un contrôleur de réseau 104, relié au satellite par l'intermédiaire d'une passerelle satellite 105, en fonction des besoins. Suivant la topologie du réseau, le réseau satellitaire peut également comprendre un concentrateur (non représenté) configuré pour relayer les données en leur apportant du gain de transmission (topologie dite en étoile).

De manière à ce que les transmissions soient robustes faces à un environnement de propagation dans lequel peuvent être présents des interférences, le procédé selon l'invention utilise une structure de trame TDMA utilisant l'étalement par saut de fréquence (FHSS). Pour ceci, des paliers sont définis, chaque palier correspondant à une durée allouée sur un canal de fréquence particulier de l'ensemble de la bande de fréquence du lien de communications. Les paliers sont transmis sur une fréquence sélectionnée parmi un lot de fréquences selon une loi de saut connue des équipements du système satellitaire seulement. Les transmissions de données entre un satellite et un terminal utilisateur, ou entre un terminal utilisateur et un satellite se font sur des suites de paliers successifs attribués à la transmission, nommés trames. Les données transmises sur une trame sont codées protégées par un entrelaceur et un code correcteur d'erreur, de manière à pouvoir corriger les erreurs introduites par les interférences perçues sur un ou plusieurs paliers. La robustesse aux interférences de ce mécanisme de transmission utilisant l'étalement de spectre par évasion de fréquence va donc croissante avec l'augmentation du nombre de paliers compris dans la trame.

Ce mécanisme correspond à l'état de l'art des formes d'onde robustes aux interférences dans un réseau satellitaire. Il présente cependant l'inconvénient que le nombre de paliers des trames est dimensionné par rapport aux performances de résistance aux interférences recherchées. Ce mécanisme est donc sous-optimal en termes d'efficacité spectrale dès lors que l'environnement de propagation n'est pas ou peu soumis aux interférences.

Le procédé d'allocation de ressources dans un système satellitaire selon l'invention propose de définir une supertrame pour organiser les transmissions. Le concept de supertrame est un concept commun à de nombreux standards de transmission radiofréquence, satellitaires ou non, en particulier les standards satellitaires DVB-S et DVB-S2. Les supertrames sont de durées fixes, et regroupent des trames de données utiles et des trames de signalisation. Le concept de supertrame est compatible de l'étalement par évasion de fréquence (FHSS).

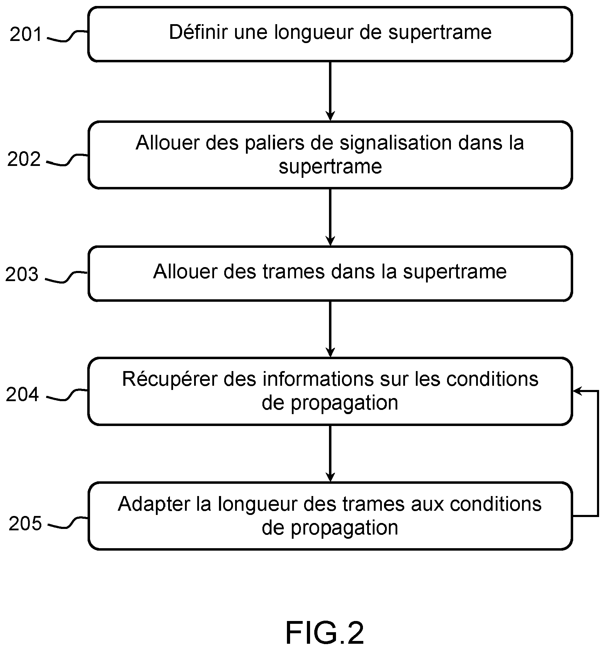

La figure 2 représente les différentes étapes du procédé d'allocation de ressources dans un système satellitaire à évasion de fréquence selon un mode de réalisation l'invention.

Il comprend une première étape 201 de définition d'une longueur de supertrame, la longueur de la supertrame étant un multiple entier du nombre de paliers. En pratique, cette étape n'est réalisée qu'une seule fois, lors de la définition du protocole de communication utilisé par le réseau satellitaire. Lorsque le système comprend un lien de communication montant (des terminaux utilisateurs vers le satellite) et un lien de communication descendant (du satellite vers les terminaux utilisateurs) distincts, une supertrame montante et une supertrame descendante peuvent être définies. Les deux supertrames sont opérées simultanément et partagent la ressource fréquentielle de manière à ce que les paliers de la supertrame montante et les paliers de la supertrame descendante n'occupent jamais simultanément le même canal fréquentiel (les lois de saut des trames montantes et descendantes sont orthogonales).

Le procédé comprend une deuxième étape 202 d'allocation de paliers dédiés à la transmission de données de signalisation dans la ou les supertrames. La signalisation est transmise sur ces paliers dédiés avec un schéma de modulation et de codage choisi de manière à bénéficier d'un bon bilan de liaison afin d'être résistante aux perturbations liées à la propagation et aux interférences.

Les étapes 201 et 202 sont connues de l'homme du métier des communications par satellite antibrouillées. Elles sont planifiées à l'avance lors de la définition du réseau et des protocoles de transmission employés.

Le procédé selon l'invention comprend ensuite les étapes 203 à 205 d'allocation de trames aux différents utilisateurs dans la ou les supertrames, de récupération d'informations sur les conditions de propagation, et d'adaptation de la longueur des trames en fonction de ces conditions de propagation. Ces étapes sont réalisées par le contrôleur de réseau 104 en charge des allocations de ressources aux différents utilisateurs dans le réseau satellitaire. Les allocations sont faites en fonction des besoins de transmission des différents utilisateurs. Lors de la première allocation 203, les trames ont une longueur par défaut, par exemple des trames assez courtes, très efficaces spectralement, ou à l'inverse des trames très longues, robustes aux interférences. Lors des allocations suivantes 205, la longueur des trames est adaptée aux conditions de propagation. Pour ceci, lors de l'étape 204, les terminaux utilisateurs du réseau mesurent la qualité des signaux reçus du satellite sur les différents canaux fréquentiels, et renvoient ces informations de qualité au contrôleur de réseau via le satellite dans les paliers dédiés à la signalisation. Ces informations sont ensuite utilisées par le contrôleur de réseau pour déterminer la longueur des prochaines trames attribuées à ces terminaux utilisateurs.

Les deux étapes 204 et 205 sont itératives. Elles peuvent être réalisées pour chaque supertrame, à intervalles réguliers, ou lorsque les transmissions vers/depuis un terminal utilisateur présentent des taux d'erreur trop importants.

Les informations de qualité remontées par les terminaux utilisateurs lors de l'étape 204 peuvent être des mesures de rapport signal à bruit (en anglais *Signal to Noise Ratio,* ou SNR), des mesures de rapport interférence sur signal (en anglais *Jammer to Signal ratio*, ou J/S) ou des mesures de taux d'erreur bit (en anglais *Bit Error Rate*, ou BER), ou n'importe quelle autre mesure permettant de juger de la qualité de la réception sur les différents canaux fréquentiels. Ces mesures sont réalisées en continu à partir des signaux reçus par les terminaux utilisateurs sur ces canaux fréquentiels, même lorsque les transmissions ne leur sont pas destinées. Elles peuvent, en fonction des choix d'implémentation, être des mesures instantanées, qui permettent d'adapter la structure des supertrames de manière très réactive dès l'apparition d'une interférence, ou être lissées dans le temps pour être plus précises.

Dans le procédé selon l'invention, la longueur des trames est ajustée dynamiquement lors de l'étape 205 de manière à toujours fournir le meilleur compromis entre protection contre les interférences et efficacité spectrale. Les différents acteurs du réseau sont informés du changement de structure des supertrames par des informations de signalisation transmises par le satellite. Le procédé peut être complété par un autre mécanisme d'adaptation des transmissions aux conditions de propagation, comme par exemple un mécanisme d'ACM.

Lorsque les informations de qualité remontées par les terminaux utilisateurs au contrôleur de réseau sont des informations de J/S, le procédé selon l'invention augmente la taille des trames, c'est-à-dire le nombre de paliers sur lesquels les données sont codées et entrelacées, lorsque le rapport J/S augmente, de sorte que la taille des trames augmente avec le niveau d'interférences observé, et inversement.

Lorsque les informations de qualité sont des informations de SNR, le contrôleur de réseau les analyse de manière à déterminer si une dégradation du SNR provient de mauvaises conditions de propagation ou d'une interférence des transmissions. Il peut à cet effet mesurer un SNR moyen correspondant à la moyenne des SNR observés sur les différents canaux fréquentiels, et un écart type des mesures de SNR. Lorsque le SNR moyen diminue mais que l'écart type des mesures de SNR est faible ou que l'écart type reste constant dans le temps, c'est-à-dire lorsque tous les canaux fréquentiels semblent affectés de la même manière, il est peu probable que la transmission soit l'objet d'interférences. Le contrôleur de réseau privilégie dans ce cas l'amélioration de la robustesse des transmissions en adaptant le schéma de modulation et de codage de la transmission. Le nombre de paliers par trame peut également être augmenté afin de permettre l'utilisation de schémas de codage plus robustes ou de schémas d'entrelacement plus longs. Lorsque l'écart type est important ou qu'il bouge beaucoup dans le temps, il est probable que la transmission soit l'objet d'interférences. Le contrôleur de réseau privilégie dans ce cas l'amélioration de la robustesse des transmissions en augmentant la taille des trames, afin d'apporter plus de diversité fréquentielle et donc une meilleure résistance aux interférences. Le schéma de modulation et de codage peut également être modifié dans un second temps si nécessaire.

De manière alternative, le contrôleur de réseau peut calculer un taux de paliers brouillés à partir des informations de SNR qui lui sont transmises, et ajuster la longueur des trames en fonction de ce taux de paliers brouillés.

Les mesures de la qualité du canal de propagation peuvent être prises en compte séparément pour chaque terminal utilisateur, afin d'ajuster la taille des trames qui lui sont allouées par rapport aux conditions de propagation rencontrées par chaque terminal, ou en adaptant la structure de l'ensemble de la supertrame par rapport aux pires conditions de propagation rencontrées par les terminaux utilisateurs. De manière alternative, les mesures de la qualité du canal de propagation peuvent être prises en compte globalement, en calculant des conditions de propagation moyennes sur l'ensemble du réseau, et en ajustant la longueur des trames allouées aux terminaux utilisateurs par rapport à ces conditions de propagation moyennes.

Le procédé d'allocation de ressources selon l'invention, dans lequel les terminaux utilisateurs 101, 102 transmettent au contrôleur de réseau 104 des informations sur la qualité du canal de propagation sur la liaison descendante, permet d'adapter la structure des supertrames à la présence d'interférences, en particulier lorsque les interférences perturbent la réception des signaux par les terminaux utilisateurs. Il présente plusieurs avantages :
- il offre une plage de fonctionnement très large permettant de fonctionner aussi bien avec des niveaux d'interférences importants qu'en l'absence d'interférences sans qu'il soit nécessaire de recourir à plusieurs liens de transmission implémentés en parallèle et en optimisant l'utilisation de la ressource spectrale,
- il permet de passer de manière souple et dynamique d'un mode de fonctionnement à faible latence performant en l'absence d'interférences vers un mode de fonctionnement tolérant un taux élevé d'interférences et inversement,
- il permet un réglage dynamique du point de fonctionnement optimum de la forme d'onde,
- il permet d'optimiser le partage de ressources entre plusieurs terminaux,
- il permet d'ajuster le nombre de paliers par trame sans modifier la durée des paliers.

Avantageusement, le satellite 103 peut en outre être configuré pour mesurer la qualité du canal de propagation sur la liaison montante, et transmettre ces informations de qualité au contrôleur de réseau en complément de celles transmises par les terminaux utilisateurs. Ce mode de réalisation permet d'adapter la structure des supertrames à la présence d'interférences, en particulier lorsque les interférences perturbent la réception des signaux par le satellite. Avantageusement toujours, les informations de qualité mesurées par les terminaux utilisateurs peuvent être prises en compte pour adapter la structure de la supertrame descendante, et les informations de qualité mesurées par le satellite peuvent être prises en compte pour adapter la structure de la supertrame montante.

La stratégie employée pour adapter la longueur et avantageusement le schéma de modulation et de codage des trames est un choix d'implémentation qui dépend des paramètres de la forme d'onde, de la robustesse aux interférences recherchée, et du type et du niveau d'interférences envisagées. Des seuils peuvent être définis, associés à différentes longueurs de trames et schémas d'entrelacements, et avantageusement différents schéma de modulation et de codage, pour adapter la robustesse et le débit des transmissions aux phénomènes de propagation rencontrés. L'adaptabilité de la longueur des trames du procédé selon l'invention permet de bénéficier d'une efficacité spectrale optimale en l'absence d'interférences, et d'une robustesse importante en présence d'interférences.

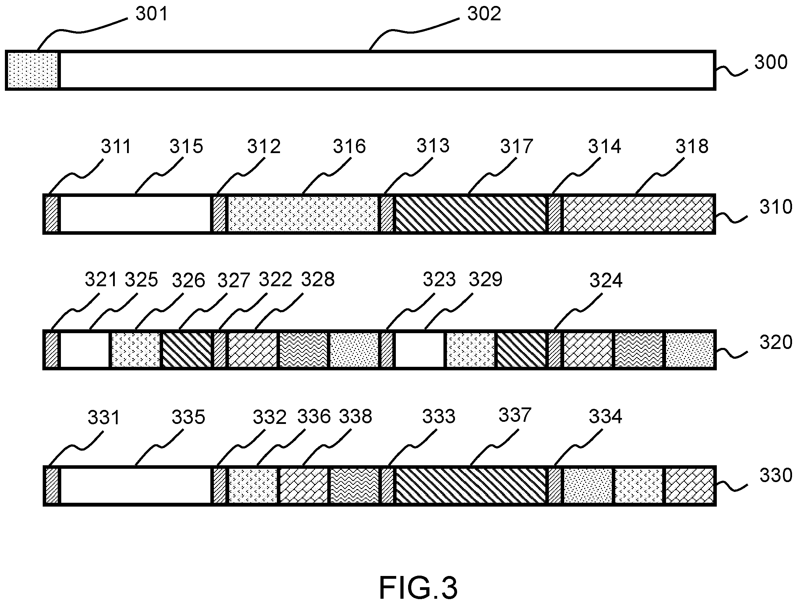

La figure 3 représente différentes configurations de supertrames mises en œuvre par le procédé selon l'invention, dans le cadre d'une liaison satellitaire où une supertrame est définie pour la liaison montante et une supertrame est définie pour la liaison descendante.

La supertrame 300 représente une supertrame descendante. Elle comprend une trame d'entête 301 dédiée à la transmission de données de signalisation. Dans un mode de réalisation du procédé selon l'invention, la trame de signalisation 301 comprend, en plus des données de signalisation habituelles transmises dans les supertrames (par exemple la puissance d'émission, la largeur de bande attribuée, etc...), des informations relatives à la structure de la supertrame descendante 300 et de la supertrame montante 310, 320 ou 330. Ces informations peuvent être représentées sous la forme d'une table donnant les allocations détaillées de chaque palier de la supertrame. De manière alternative, des configurations de supertrames peuvent être programmées à l'avance et connues de l'ensemble des acteurs du réseau. Dans ce cas, les informations 301 relatives à la structure de la supertrame descendante et de la supertrame montante sont réduites à l'identifiant d'une structure de supertrame, ce qui permet de minimiser le nombre de bits supplémentaires transmis dans l'entête de la supertrame descendante.

Les informations de signalisation 301 sont réparties sur un ou plusieurs paliers, et encodées et/ou entrelacées de manière à être robustes aux interférences.

La suite 302 de la supertrame descendante peut comprendre différentes trames, allouées pour les transmissions de données utiles ou de données de signalisation vers différents terminaux utilisateurs en fonction des besoins.

Le bloc 310 représente une structure possible de supertrame montante robuste, adaptée à des transmissions dans un environnement de propagation brouillé. Elle comprend des trames de signalisation 311, 312, 313 et 314 réservées pour la transmission, par les terminaux utilisateurs, d'informations relatives aux conditions de propagation, par exemple des mesures de rapport signal à bruit par canal fréquentiel. La longueur des trames de signalisation peut être d'un ou de plusieurs paliers suivant les performances recherchées.

Les trames 315, 316, 317 et 318, composées chacune d'un même nombre de paliers, sont des trames de données respectivement allouées à quatre terminaux utilisateurs distincts. Le nombre de paliers composant les trames est choisi par rapport à un niveau de robustesse aux interférences donné. Dans l'exemple de la supertrame 310, les trames comprennent un nombre élevé de paliers, la structure de la supertrame privilégiant la robustesse aux interférences à l'efficacité spectrale. Une trame de signalisation est allouée à chaque terminal utilisateur où à chaque groupe d'utilisateurs (communications de type « broadcast »). Dans la figure 3, la trame de signalisation 311 est allouée au terminal utilisateur utilisant la trame de données 315, la trame de signalisation 312 est allouée au terminal utilisateur utilisant la trame de données 316, et ainsi de suite, afin de permettre la remontée, par chaque terminal utilisateur, d'informations concernant les conditions de propagation.

Le bloc 320 représente une structure possible de supertrame montante efficace, adaptée à des transmissions dans un environnement de propagation peu ou pas brouillé, et présentant une très bonne efficacité spectrale et une faible latence. Elle comprend des trames de signalisation 321, 322, 323 et 324 réservées pour la transmission, par les terminaux utilisateurs, d'informations relatives aux conditions de propagation, par exemple des mesures de rapport signal à bruit par canal fréquentiel. La longueur des trames de signalisation peut être d'un ou de plusieurs paliers suivant les performances et latences recherchées.

Les trames 325, 326, 327 et 328, composées chacune d'un même nombre de paliers, sont des trames de données respectivement allouées à quatre terminaux utilisateurs distincts. Le nombre de paliers composant les trames est choisi par rapport à un niveau de robustesse aux interférences donné. Dans l'exemple de la supertrame 310, les trames comprennent un nombre faible de paliers, la structure de la supertrame privilégiant l'efficacité spectrale à la robustesse aux interférences. Une trame de signalisation est allouée à chaque terminal utilisateur où à chaque groupe d'utilisateurs. Dans la figure 3, la trame de signalisation 321 est allouée au terminal utilisateur utilisant la trame de données 325, la trame de signalisation 322 est allouée au terminal utilisateur utilisant la trame de données 326, et ainsi de suite, afin de permettre la remontée, par chaque terminal utilisateur, d'informations concernant les conditions de propagation.

Les trames de la supertrame 320 étant plus courtes que celles de la supertrame 310, des trames supplémentaires peuvent être allouées aux différents terminaux utilisateurs dans la supertrame, par exemple la trame 329 pour le premier terminal utilisateur.

Les supertrames montantes 310 et 320 sont conçues de manière à ce que tous les utilisateurs bénéficient du même niveau de robustesse vis-à-vis des interférences. Avantageusement, différents types de supertrames peuvent être référencés et désignés par un identifiant, et connus de l'ensemble du réseau. Dans ce cas, seul l'identifiant est transmis dans la trame de signalisation 301 pour permettre aux terminaux utilisateurs de détecter les changements de format de supertrame.

De manière alternative, les supertrames peuvent comprendre des trames de longueurs différentes, adaptées chacune au niveau d'interférences rencontré par le terminal utilisateur auquel elle est allouée.

Le bloc 330 représente une structure possible de supertrame montante hybride, adaptée aux conditions de propagation rencontrées par chaque terminal utilisateur. Elle comprend des trames de signalisation 331, 332, 333 et 334 réservées pour la transmission, par les terminaux utilisateurs, d'informations relatives aux conditions de propagation, par exemple des mesures de rapport signal à bruit par canal fréquentiel. La longueur des trames de signalisation peut être d'un ou de plusieurs paliers suivant les performances recherchées.

Les trames 335, 336, 337 et 338 sont des trames de données respectivement allouées à quatre terminaux utilisateurs distincts. Elles sont ici composées d'un nombre variable de paliers, choisi par rapport à un niveau de robustesse aux interférences donné ajusté en fonction des conditions de propagations perçu par le terminal utilisateur concerné. Une trame de signalisation est allouée à chaque terminal utilisateur ou à chaque groupe d'utilisateurs (communications broadcast). Dans la figure 3, la trame de signalisation 331 est allouée au terminal utilisateur utilisant la trame de données 335, la trame de signalisation 332 est allouée au terminal utilisateur utilisant la trame de données 336, et ainsi de suite, afin de permettre la remontée, par chaque terminal utilisateur, d'informations concernant les conditions de propagation.

Dans les modes de réalisation représentés à la figure 3, les informations 301 transmises par le contrôleur de réseau concernant la structure des supertrames sont envoyées au début de la supertrame, ce qui permet de communiquer immédiatement la structure des supertrames à l'ensemble des équipements du réseau, et de les adapter en temps réel aux variations des conditions de propagation rencontrées par les terminaux utilisateurs. Cependant, d'autres modes de réalisation moins réactifs sont possibles, par exemple en transmettant les informations relatives à la structure d'une supertrame à venir. De ce cas, les informations sur la structure des supertrames peuvent être disposées à n'importe quel endroit de la supertrame.

Les informations montantes transmises par les terminaux utilisateurs, relatives aux conditions de propagation rencontrées, peuvent être transmises à n'importe quel endroit de la supertrame, peuvent être déplacées d'une trame à l'autre pour plus de discrétion, peuvent être regroupées, peuvent être transmises uniquement dans certaines supertrames, ou peuvent être transmises à l'intérieur des trames de données 315, 325, 335, auquel cas les trames de signalisation 311, 321, 331 ne sont plus nécessaires à la mise en œuvre du procédé selon l'invention.

La figure 3, donnée à titre d'exemple, montre l'adaptation de la structure de la supertrame montante aux conditions d'interférences rencontrées par les terminaux utilisateurs. La supertrame descendante 300 peut être définie de manière identique, en attribuant aux différents utilisateurs des trames de durées adaptables en fonction des conditions de propagation rencontrées. Le procédé s'applique de manière identique lorsqu'une seule supertrame est en charge du multiplexage des données montantes et descendantes.

## Revendications

1. Procédé d'allocation de ressources dans un système satellitaire à évasion de fréquence comprenant un satellite (103) et au moins un terminal utilisateur (101, 102) dans lequel les transmissions sont organisées sous la forme de supertrames (300, 310, 320, 330) comprenant une pluralité de trames (311, 315, 325), chaque trame comprenant un ou plusieurs paliers de données, chaque palier de données étant transmis sur un canal fréquentiel sélectionné parmi un ensemble de canaux fréquentiels selon une loi connue des équipements du système satellitaire, le procédé étant **caractérisé en ce qu'**il comprend l'adaptation dynamique (205) du nombre de paliers compris dans les trames en fonction des conditions de propagation des signaux émis par le satellite et reçus par les terminaux utilisateurs.

2. Procédé d'allocation de ressources selon la revendication 1, comprenant :
- une étape (204) de transmission, par les terminaux utilisateurs vers un contrôleur de réseau (104) en charge des allocations de ressources du réseau via le satellite, d'informations (311, 312, 313) concernant les conditions de propagation,
- une étape (205) d'allocation, par le contrôleur de réseau, de trames aux différents utilisateurs et de transmission d'informations (301) concernant la structure des supertrames aux terminaux du système satellitaire en fonction desdites conditions de propagation.

3. Procédé d'allocation de ressources selon la revendication 2, dans lequel une pluralité de structures de supertrames sont prédéfinies, et où les informations (301) concernant la structure des supertrames sont un identifiant d'une desdites structures de supertrames prédéfinies.

4. Procédé d'allocation de ressources selon l'une des revendications 2 et 3, dans lequel les informations concernant les conditions de propagation sont au moins un parmi une mesure de rapport signal à bruit, une mesure de rapport interférence sur signal et une mesure de taux d'erreur bit.

5. Procédé d'allocation de ressources selon la revendication 4, dans lequel les informations concernant les conditions de propagation sont des mesures de rapport signal à bruit par canal fréquentiel, le procédé comprenant :
- le calcul d'une valeur moyenne et d'une variance des mesures de rapport signal à bruit, et
- l'adaptation du nombre de paliers par trame à partir de la variation de la valeur moyenne et de la variance des mesures de rapport signal à bruit.

6. Procédé d'allocation de ressources selon l'une des revendications précédentes, comprenant en outre l'adaptation dynamique d'un schéma de modulation et de codage utilisé pour transmettre les données dans les trames en fonction des conditions de propagation.

7. Procédé d'allocation de ressources selon l'une des revendications précédentes, dans lequel l'adaptation dynamique du nombre de paliers compris dans les trames est réalisée en outre en fonction des conditions de propagation des signaux émis par les terminaux utilisateurs (101, 102) et reçus par le satellite (103).
